# EUROPEAN PATENT APPLICATION

(11) **EP 4 603 301 A1**
(43) Date of publication of application: **20.08.2025**
(21) Application number: 23876947.5
(22) Date of filing: 13.06.2023
(51) Int. Cl.: B60C 7/00, B60B 9/04, B60C 7/24

(54) **TIRE/RIM ASSEMBLY**

(30) Priority: 12.10.2022 JP 2022164240
(71) Applicant: BRIDGESTONE CORPORATION, Chuo-ku Tokyo 104-8340 (JP)
(72) Inventor: TANIGUCHI Yoshihiro, Tokyo 104-8340 (JP); ABE Akihiko, Tokyo 104-8340 (JP)
(74) Representative: Marks & Clerk LLP
(86) International application number: PCT/JP2023/021975
(87) International publication number: WO 2024/079938

(57) **Abstract**

The tire and rim assembly of this disclosure is composed of a non-pneumatic tire comprising an inner cylinder; an outer cylinder that surrounds the inner cylinder from an outer side in a tire radial direction; and a connecting member that can be elastically deformed and connect the inner cylinder and the outer cylinder to each other, mounted on a rim comprising a flange portion, wherein a protrusion is provided on at least a part in a circumferential direction of the inner cylinder, which protrudes outward in a tire width direction beyond a tire widthwise end at a tire radially inner end of the connecting member, a recess is provided on at least a part in a circumferential direction of the flange portion, which is recessed outward in an axial direction, and the protrusion is fitted into the recess.

## Description

### TECHNICAL FIELD

This disclosure relates to a tire and rim assembly, in particular, a tire and rim assembly in which a non-pneumatic tire is mounted on a rim.

### BACKGROUND

Conventionally, in non-pneumatic tires, a rim is split into two parts in the axial direction and those are inserted from both sides in the axial direction, a tire is mounted on the rim, and then the tire and the rim are fixed together using additional fasteners (for example, Patent Document 1).

### CITATION LIST

### Patent Literature

PTL 1: JP 5879089 B2

### SUMMARY

### (Technical Problem)

However, with the above method, there was concern that the gap between the tire and the rim could result in a decrease in durability.

This disclosure was made in light of the aforementioned circumstances, and aims to provide a tire and rim assembly that suppresses a decrease in durability.

### (Solution to Problem)

The gist and configuration of the present disclosure are as follows.
(1) A tire and rim assembly in which a non-pneumatic tire comprising an inner cylinder; an outer cylinder that surrounds the inner cylinder from an outer side in a tire radial direction; and a connecting member that can be elastically deformed and connect the inner cylinder and the outer cylinder to each other, is mounted on a rim comprising a flange portion, wherein
   a protrusion is provided on at least a part in a circumferential direction of the inner cylinder, which protrudes outward in a tire width direction beyond a tire widthwise end at a tire radially inner end of the connecting member,
   a recess is provided on at least a part in a circumferential direction of the flange portion, which is recessed outward in an axial direction, and
   the protrusion is fitted into the recess.

### (Advantageous Effect)

According to the present disclosure, it is possible to provide a tire and rim assembly that suppresses a decrease in durability.

### BRIEF DESCRIPTION OF THE DRAWINGS

In the accompanying drawings:
FIG. 1 is a side view of a tire and rim assembly in one embodiment of the present disclosure;
FIG. 2 is a side view of a non-pneumatic tire;
FIG. 3 is a cross-sectional view along A-A in Figure 2;
FIG. 4 is an enlarged view of part B in Figure 3;
FIG. 5 is a perspective cross-sectional view of a key part of the non-pneumatic tire;
FIG. 6 is a partial perspective view of the non-pneumatic tire;
FIG. 7 is a partial perspective view of a non-pneumatic tire according to a comparative example;
FIG. 8 is a perspective cross-sectional view of a key portion of a rim;
FIG. 9 is a perspective cross-sectional view of a key part of a tire and rim assembly in one embodiment of the present disclosure; and
FIG. 10 is an enlarged cross-sectional view of a key part of a tire and rim assembly in one embodiment of the present disclosure.

### DETAILED DESCRIPTION

Hereinafter, embodiments of the present disclosure will be described in detail with reference to the drawings.

### < Tire and rim assembly >

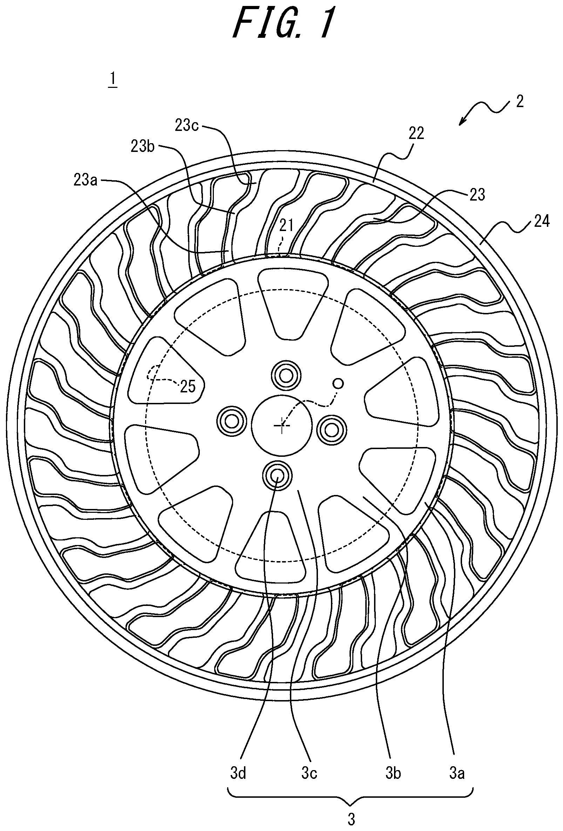

Figure 1 is a side view of a tire and rim assembly 1 in one embodiment of the present disclosure. As illustrated in Figure 1, this tire and rim assembly 1 comprises a non-pneumatic tire 2 mounted on a rim 3. The non-pneumatic tire 1 in this embodiment is used by mounting on, for example, bicycles, motorcycles, cars, and electric wheelchairs with handlebars.

Here, the non-pneumatic tire 2 is formed in a circular shape, and the rim 3 is formed in a disc shape, with the center axis of each located on a common axis. This common axis is called a center axis O, and the direction along the center axis O is called the tire width direction. Also, when viewed from the tire width direction, the direction going around the center axis O is called the tire circumferential direction, and the direction that intersects this center axis O is called the tire radial direction. The center in the tire width direction of the non-pneumatic tire 2 and that of the rim 3 are aligned with each other.

It will be noted that the non-pneumatic tire 2 has a function to absorb vibrations transmitted from the ground to the axle, and the rim 3 has a function to connect the axle and the non-pneumatic tire 2. The non-pneumatic tire 2 and the rim 3 may be made of different materials. For example, the non-pneumatic tire 2 may be made of a material with a relatively low elastic modulus in order to ensure vibration absorption performance, and the rim 3 may be made of a material with an elastic modulus greater than that of the non-pneumatic tire 2 in order to ensure robustness. In addition, for example, the rim 3 may be made of a material with a relatively low specific gravity to reduce the overall weight of the tire and rim assembly 1. The following is a detailed explanation of the configuration of the non-pneumatic tire 2 and the rim 3.

### << Non-pneumatic tire >>

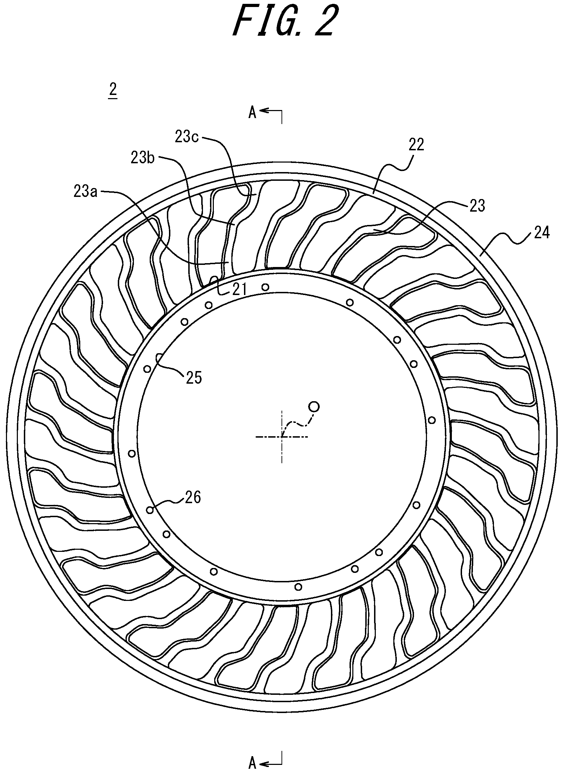

Figure 2 is a side view of the non-pneumatic tire. As illustrated in Figures 1 and 2, the non-pneumatic tire 2 comprises an inner cylinder 21, an outer cylinder 22 that surrounds the inner cylinder 21 from the outer side in the tire radial direction, and a plurality of connecting members 23 that can be elastically deformed and connect the inner cylinder 21 and the outer cylinder 22 to each other. In addition, the non-pneumatic tire 1 further comprises a tread 24 that is fitted over the outer cylinder 22.

The elastic modulus of the material forming the inner cylinder 21, the outer cylinder 22, and the connecting members 23 may be, for example, 100 MPa or more and 1500 MPa or less.

The inner cylinder 21 is attached to the axle via the rim 3. The center axes of the inner cylinder 21 and the outer cylinder 22 are arranged coaxially with the center axis O. The inner cylinder 21, the outer cylinder 22, and the connecting members 23 are arranged so that the center in the tire width direction of each is aligned with each other. In this embodiment, the inner cylinder 21, the outer cylinder 22, and the connecting members 23 are formed as a single piece using a thermoplastic resin. This allows the non-pneumatic tire 2 to be formed by injection molding, making it suitable for mass production. As the thermoplastic resin, for example, it may be a single type of resin, a mixture containing two or more types of resins, or a mixture containing one or more types of resins and one or more types of elastomers, and furthermore, it may also contain additives such as antioxidants, plasticizers, fillers, or pigments. The inner cylinder 21, the outer cylinder 22, and the connecting members 23 may be formed separately. The inner cylinder 21, the outer cylinder 22, and the connecting member 23 may be made of materials other than a thermoplastic resin.

The connecting members 23 are arranged in a plurality of locations between the inner cylinder 21 and the outer cylinder 22 so that they are symmetrical about the central axis O. The connecting members 23 that are adjacent to each other in the tire circumferential direction are arranged with no contact between them and separated from each other. As illustrated in the drawings, the connecting member 23 has a bent shape when viewed from the side, and is composed of two parts 23a and 23c with a small inclination angle with respect to the tire radial direction, connected by a part 23b with a large inclination angle with respect to the tire radial direction. As a result, the tire radially inner end of the portion 23a connected to the inner cylinder 21 is positioned on one side in the tire circumferential direction, relative to the tire radially outer end of the portion 23c connected to the outer cylinder 22. In this way, the connecting member 23 can be used as a leaf spring that is easily elastically deformed in the tire radial direction.

The tread 24 is formed in the shape of a cylinder that extends in the tire width direction around the central axis O. The tread 24 covers not only the outer circumference of the outer cylinder 22, but also the tire radially outer end portion of the side facing the tire width direction. The elastic modulus of the material forming the tread 24 is smaller than the elastic modulus of the material forming the other parts of the non-pneumatic tire 2. The outer circumference of the tread 24 has a curved shape that is convex outward in the tire radial direction when viewed in a longitudinal cross-section along both the tire width direction and the tire radial direction. The tread 24 is formed, for example, of vulcanized rubber in which natural rubber and/or rubber composition is vulcanized, or thermoplastic material, etc. From the perspective of wear resistance, it is preferable to form the tread 24 with vulcanized rubber. Examples of the thermoplastic material include a thermoplastic elastomer and a thermoplastic resin. Examples of the thermoplastic elastomer include amide-based thermoplastic elastomers (TPAs), ester-based thermoplastic elastomers (TPCs), olefin-based thermoplastic elastomers (TPOs), styrene-based thermoplastic elastomers (TPSs), urethane-based thermoplastic elastomers (TPUs), thermoplastic vulcanizates (TPVs), and other thermoplastic elastomers (TPZs), as specified in JIS K6418. Examples of the thermoplastic resin include an urethane resin, an olefin resin, a polyvinyl chloride resin, and a polyamide resin.

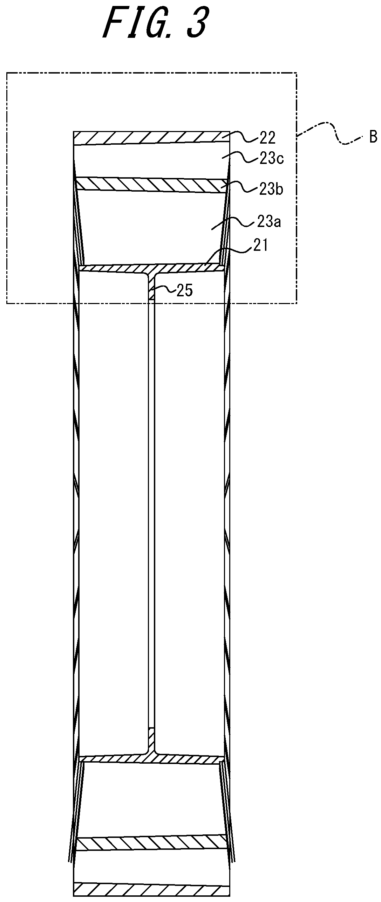

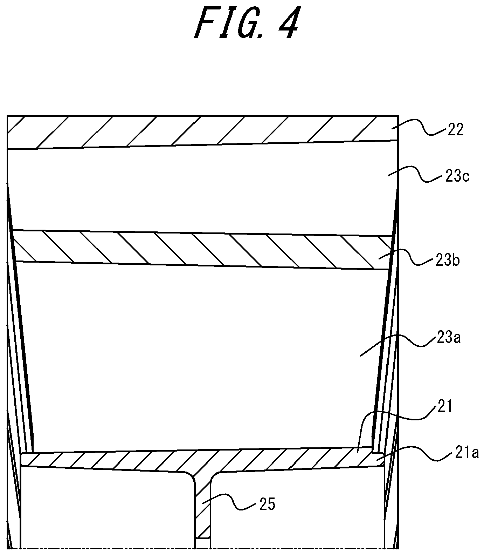

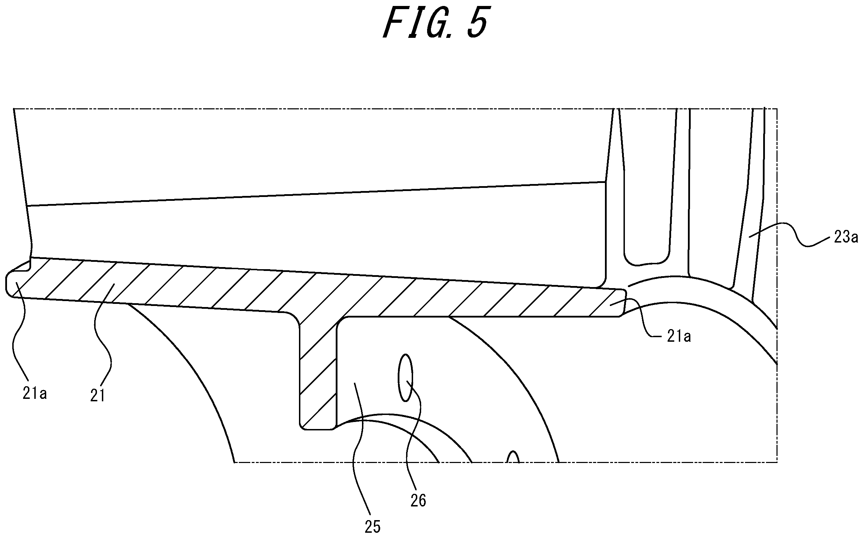

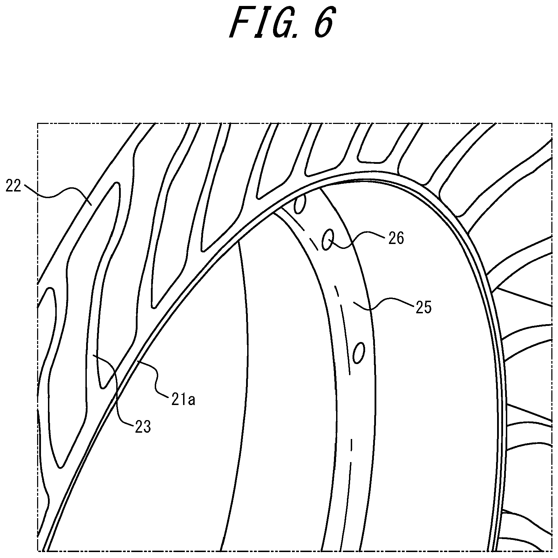

Figure 3 is a cross-sectional view along the A-A in Figure 2. Figure 4 is an enlarged view of part B in Figure 3. Figure 5 is a perspective cross-sectional view of a key part of a non-pneumatic tire. Figure 6 is a partial perspective view of a non-pneumatic tire. However, for the sake of simplicity, the tread 24 is omitted in Figure 3 and subsequent figures.

As illustrated in Figures 4 to 6, a protrusion 21a is provided on at least a part in the tire circumferential direction of the inner cylinder 21, which protrudes outward in the tire width direction beyond the tire widthwise end at the tire radially inner end of the connecting member 23 (the part 23a). In this example, the protrusion 21a is provided continuously on the entire circumference in the circumferential direction of the inner cylinder 21. For this reason, in this example, the tire widthwise width of the inner cylinder 21 is greater than the tire widthwise width at the tire radially inner end of the connecting member 23 (the part 23a).

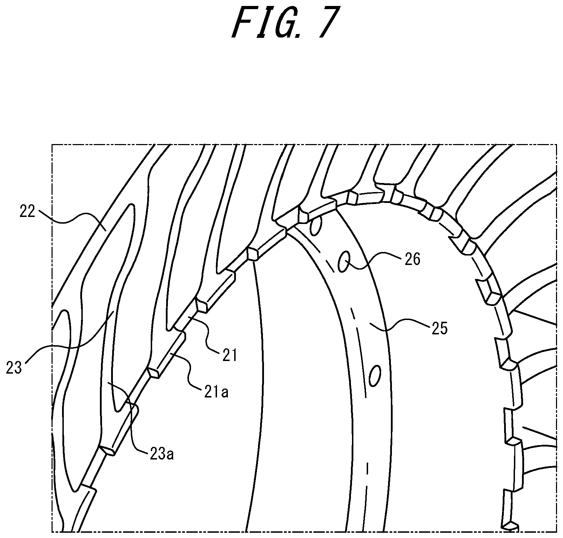

Figure 7 is a partial perspective view of the non-pneumatic tire according to a modified example. In this modified example, the protrusion 21a is provided on only a part in the circumferential direction of the inner cylinder 21. More specifically, a plurality of protrusions 21a are arranged at equal intervals in the circumferential direction of the inner cylinder 21. In this example, the protrusion 21a is provided in a position adjacent to the tire radially inner part 23a of the connecting member 23. This is because the connecting member 23 is a part that undergoes a large amount of deformation, and therefore this part needs to strengthen the fit with the rim 3. On the other hand, when the protrusion 21a is provided on only a part in the circumferential direction of the inner cylinder 21, it is not limited to the above arrangement. For example, it can be provided in a position that is not adjacent to the tire radially inner part 23a of the connecting member 23, or it can be provided at irregular intervals in the circumferential direction.

A tire-side protrusion 25 is further provided on at least a part (in the illustrated example, the entire circumference) in the circumferential direction of the inner cylinder 21, which protrudes inward in the tire radial direction. In addition, the tire-side protrusion 25 is provided with one or more (in the illustrated example, a plurality of) through holes 26 that penetrate in the tire width direction.

### << Rim >>

As illustrated in Figure 1, the rim 3 comprises a rim portion 3a, a plurality of spokes 3b extending radially inward from the rim portion 3a, and a vehicle attachment portion 3c connected to the radially inner end of the plurality of spokes 3b. A plurality of bolt through holes 3d are provided on the circumference of the vehicle attachment portion 3c. The rim 3 can be made of metal, for example.

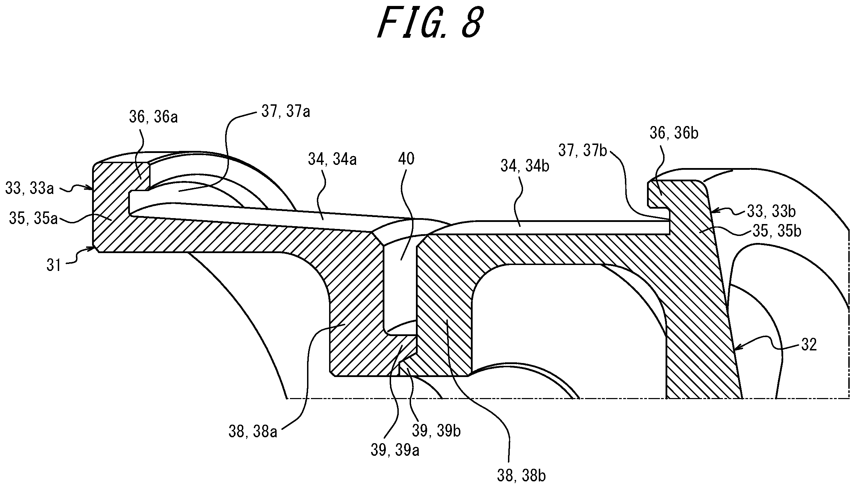

Figure 8 is a perspective cross-sectional view of a key portion of the rim. As illustrated in Figure 8, the rim 3 is composed of a first rim section 31 and a second rim section 32, which are divided into two parts in the tire width direction in this example. When mounting the non-pneumatic tire 2 onto the rim 3, these first and second rim sections 31 and 32 are inserted in the tire width direction and assembled..

The outer cylinder 3c of the rim 3 is provided with a flange portion 33 (33a, 33b). The flange portion 33 is composed of a first horizontal part 34 (34a, 34b) extending in the axial direction (the tire width direction), a vertical part 35 (35a, 35b) extending radially outward from the axially outer end of the first horizontal part 34, and a second horizontal part 36 (36a, 36b) extending axially inward from the radially outer end of the vertical part 35 (with the extension length shorter than that of the first horizontal part). As a result, a recess 37 (37a, 37b) that is recessed outward in the axial direction is formed in at least a part in the circumferential direction of the flange portion 33. In the illustrated example, the recess 37 is provided continuously on the entire circumference in the circumferential direction of the flange portion 33. On the other hand, in correspondence with the modified example in Figure 7, the recess 37 may be provided on only a part in the circumferential direction of the flange portion 33.

In addition, the rim 3 has a rim-side protrusion 38 (a first rim-side protrusion 38a, a second rim-side protrusion 38b) that extends radially inward from the axially inner end of the first horizontal part 34, and a fitting part 39 (39a, 39b) that extends axially inward from the second rim-side protrusion 38. The fitting part 39a and the fitting part 39b are fitted together. Although the illustration has been omitted, a hole is provided in each of the first rim-side protrusion 38a and the second rim-side protrusion 38b, which is located on the extension of the through hole 26. A rim-side recess 40 is partitioned by the first rim-side protrusion 38a, the second rim-side protrusion 38b, and the fitting section 39 (39a, 39b).

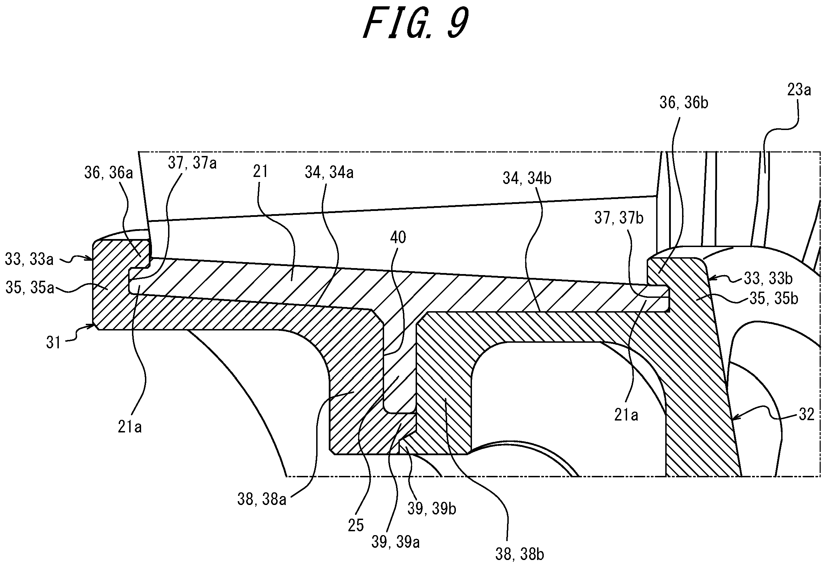

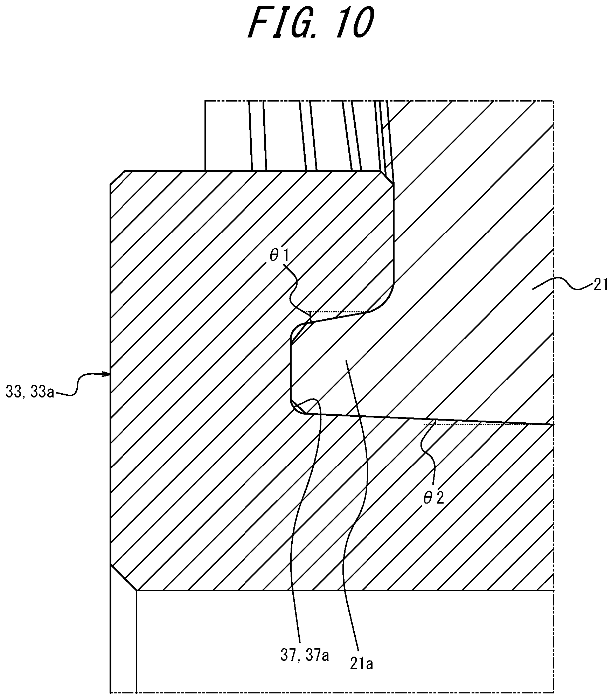

Returning to the explanation of the tire and rim assembly, Figure 9 is a perspective cross-sectional view of a key part of the tire and rim assembly in accordance with one embodiment of the present disclosure. Figure 10 is an enlarged cross-sectional view of a key part of the tire and rim assembly in accordance with one embodiment of the present disclosure. As illustrated in Figures 9 and 10, the first rim section 31 and the second rim section 32 are inserted from both sides in the tire width direction with respect to the non-pneumatic tire 2, and when the non-pneumatic tire 2 is mounted on the rim 3, the tire-side protrusion 25 of the non-pneumatic tire 2 is fitted into the rim-side recess 40 of the rim 3. In addition, the protrusion 21a of the non-pneumatic tire 2 fits into the recess 37 of the rim 3. Note that there may be a gap at the corner as illustrated in the drawing.

In this embodiment, the tire-side protrusion 25 and the rim-side protrusion 38 are fixed together by a fastener (not illustrated) that fits into the through hole 26 of the non-pneumatic tire 2 and the hole in the rim 3 (which is provided at a position corresponding to the position of the through hole 26). As a result, the non-pneumatic tire 2, the first rim section 31, and the second rim section 32 are fixed in place by the fastener. The fastener may be a bolt.

The following explains the effects of the tire and rim assembly 1 in this embodiment.

In the tire and rim assembly 1 of this embodiment, the protrusion 21a is provided on at least a part in the circumferential direction of the inner cylinder 21, which protrudes outward in the tire width direction beyond the tire widthwise end at the tire radially inner end of the connecting member 23, a recess 37 is provided on at least a part in the circumferential direction of the flange portion 33, which is recessed outward in the axial direction, and the protrusion 21a is fitted into the recess 37. Since the complementary shapes of the tire 2 and the rim 3 allow them to fit together, the gap between the tire 2 and the rim 3 can be almost completely eliminated, thereby preventing failures in the tire and rim assembly 1 caused by small gaps. As described above, according to the tire and rim assembly 1 of this embodiment, it is possible to improve its durability. In addition, when using additional fasteners, even though the fasteners can only provide localized fixation, the entire circumference of the inner cylinder 21, in this embodiment, can be continuously brought into close contact with the outer cylinder 22, therefore, the peeling of the inner cylinder 21 caused by the repeated occurrence of gaps and tight contact with the tire as it rotates can be suppressed, and the durability of the tire and rim assembly 1 can be further improved.

Here, it is preferable that the protrusion 21a is provided continuously on the entire circumference in the circumferential direction of the inner cylinder 21, and the recess 37 is provided continuously on the entire circumference in the circumferential direction of the flange portion 33. This is because the effect of fitting the non-pneumatic tire 2 and the rim 3 can be obtained over the entire circumference.

On the other hand, it is also preferable that the protrusion 21a is provided on only a part in the tire circumferential direction of the inner cylinder 21, and the recess 37 is provided on only a part in the tire circumferential direction of the flange portion 33. In this case, compared to a case where these are provided on the entire circumference, the weight increase can be suppressed while still achieving the effect of fitting the non-pneumatic tire 2 and the rim 3 at a part of the circumference. As mentioned above, in this case, it is preferable that the protrusion 21a is provided in a position adjacent to the tire radially inner part 23a of the connecting member 23. This is because the connecting member 23 is a part that undergoes a lot of deformation, so strengthening the fit between this part and the rim 3 can effectively improve durability.

As illustrated in Figure 10, it is preferable that the protrusion 21a gradually decreases its width in the tire radial direction from the inner side to the outer side in the tire width direction, and the recess 37 gradually decreases its width in the tire radial direction from the inner side to the outer side in the tire width direction. This is because the wedge effect further reduces the gap between the non-pneumatic tire 2 and the rim 3, thereby further increasing the durability of the tire and rim assembly 1. In this case, the top and/or bottom surfaces of the protrusion 21a will be inclined with respect to the tire width direction as illustrated in the drawing. The inclination angle θ1 of the top surface of the protrusion 21a with respect to the tire width direction is not particularly limited, but can be set to 1 to 15°, for example, and the inclination angle θ2 of the bottom surface of the protrusion 21a with respect to the tire width direction is not particularly limited, but can be set to 2 to 5°, for example. On the other hand, the top and/or bottom surfaces of the protrusion 21a can also be parallel to the tire width direction.

In the above embodiment, the protrusion width (maximum protrusion width in the tire width direction) of the protrusion 21a is not particularly limited, but can be 3 to 5% of the width in the tire width direction at the tire radially inner end of the connecting member 23.

Although the embodiment of the present disclosure has been described above, the present disclosure is not limited to the above embodiment. For example, the curved shape of the connecting member 23 can be changed as appropriate within the range in which appropriate elastic deformation is possible.

### INDUSTRIAL APPLICABILITY

### [Contributing to the United Nations-led Sustainable Development Goals (SDGs)]

The SDGs have been proposed in order to realize a sustainable society. One embodiment of this disclosure is considered to be a technology that can contribute to "No. 12_Ensure Sustainable Consumption and Production Patterns" and "No. 13_Take Urgent Action to Combat Climate Change and its Impacts".

### REFERENCE SIGNS LIST

- 1: Tire and rim assembly
- 2: Non-pneumatic tire
- 21: Inner cylinder
- 22: Outer cylinder
- 23: Connecting member
- 24: Tread
- 25: Tire-side protrusion
- 26: Through hole
- 3: Rim
- 31: First rim section
- 32: Second rim section
- 33: Flange portion
- 34: First horizontal part
- 35: Vertical part
- 36: Second horizontal part
- 37: Recess
- 38: Rim-side protrusion
- 39: Mating part
- 40: Rim-side recess

## Claims

1. A tire and rim assembly in which a non-pneumatic tire comprising an inner cylinder; an outer cylinder that surrounds the inner cylinder from an outer side in a tire radial direction; and a connecting member that can be elastically deformed and connect the inner cylinder and the outer cylinder to each other, is mounted on a rim comprising a flange portion, wherein
a protrusion is provided on at least a part in a circumferential direction of the inner cylinder, which protrudes outward in a tire width direction beyond a tire widthwise end at a tire radially inner end of the connecting member,
a recess is provided on at least a part in a circumferential direction of the flange portion, which is recessed outward in an axial direction, and
the protrusion is fitted into the recess.

2. The tire and rim assembly as described in claim 1, wherein the protrusion is provided continuously on an entire circumference in the circumferential direction of the inner cylinder, and
the recess is provided continuously on an entire circumference in the circumferential direction of the flange portion.

3. The tire and rim assembly as described in claim 1, wherein the protrusion is provided on only a part in the circumferential direction of the inner cylinder, and
the recess is provided on only a part in the circumferential direction of the flange portion.

4. The tire and rim assembly as described in claim 2 or 3, wherein the protrusion gradually decreases its width in the tire radial direction from an inner side to an outer side in the tire width direction, and
the recess gradually decreases its width in the tire radial direction from an inner side to an outer side in the tire width direction.
